# EUROPEAN PATENT APPLICATION

(11) **EP 1 473 660 A1**
(43) Date of publication of application: **03.11.2004**
(21) Application number: 04076232.0
(22) Date of filing: 26.04.2004
(51) Int. Cl.: G06K 15/00, G03G 15/00, H04N 1/00

(54) **A method of using a print system**

(30) Priority: 02.05.2003 NL 1023324
(71) Applicant: Océ-Technologies B.V., 5914 CC Venlo (NL)
(72) Inventor: Van Vliembergen, Eduardus J. W., 5924 AX Venlo (NL); Bosma, Edward Constantijn, 5912 AH Venlo (NL)
(74) Representative: Janssen, P.J.P.

(57) **Abstract**

The invention relates to a method of using a print system comprising a print engine for printing a receiving material and a holder for holding said receiving material and delivering said material for printing to the print engine, the method comprising receiving jobs by the system, a job being an order comprising printing information with the print engine on a type of receiving material specified in said order, placing the jobs in a print queue in a sequence of finishing, establishing one or more types of receiving material required to finish a set of jobs in the print queue,
displaying, via a display unit, a list comprising said one or more types of receiving material, and selection, by an operator of the system, of a type of receiving material from said list, and the insertion of said type of receiving material in the holder by the operator of the system.

## Description

The invention relates to a method of using a print system comprising a print engine for printing a receiving material and a holder for holding said receiving material and delivering said material to the print engine, the method comprising receiving jobs by the system, a job being an order comprising printing information with the print engine on a type of receiving material specified in said order, placing the jobs in a print queue in a sequence of finishing.

A print system of this kind is known from US 5,081,595. A job is programmed in a job program mode, a job ticket being displayed on a monitor screen. After the job has been programmed, it is moved from a memory to a print queue. The sequence of jobs in this queue is determined by priority allocated to each of the jobs and the time of arrival of the job in the queue. The print queue itself, at least the names of the jobs and the associated number, and a number of variables, such as the number of documents required and the type of receiving material required, are displayed on the screen if the operator of the print system so requests.
The print system at all times knows what type of receiving material is situated in each of the holders and also the different types of receiving material required for finishing a job in the print queue. In this way the system can always check whether the correct receiving material has been loaded to enable printing to start. If the correct receiving material is loaded in the holders, the job will be printed. If not, then the system will indicate to the operator what type of receiving material he should insert in one or more of the holders. If the receiving material required for the current job is present in sufficient quantity and there are one or more holders left for loading different receiving material, the operator can check whether the receiving material for the next job in the print queue is present in the holders. Thus before this next job is actually started, he can insert any receiving material not present for that job, so that the job can immediately start when the current job is completely finished.
A disadvantage of this known system is that the operator can have information concerning a following job only if the receiving material required for the current job is already loaded in the holders. This very considerably limits the operator's overview so that he feels as if he has little or no control over the print system. Another disadvantage is that a receiving material loaded must at all times be specified by the operator, even if the system has already indicated that a specific type of receiving material should be loaded. For example, if the system indicates that a receiving material of the type "A3, white, 160 g, relief" must be loaded, then after he has done this the operator must select these four settings in order to indicate that he has loaded the receiving material of the required type. This takes relatively considerable time and the fact that all the material properties have to be re-selected time and time again means that the operator is prone to making mistakes.

A method and a print system of this kind is also known from EP 1 152 591. This system also has the disadvantage that the operator only receives information concerning the required receiving material for one job. He will have to insert a possibly requested type of receiving material before the system will give any information concerning a following job.
With respect to the previously described print system this system has the advantage that the operator no longer has to specify an inserted type of receiving material, i.e. he can input all the characterising properties one by one when the system has requested a specific type of receiving material and the operator has inserted that type of material in response thereto. A confirmation of the fact that he has inserted the requested type of receiving material is sufficient. This confirmation may, for example be actuation of the "Start" button or closing the holder after the receiving material has been inserted. The disadvantage of this known system is that a complete specification of an inserted type of receiving material is always necessary if the operator decides to insert a receiving material in one of the holders without the system having reported the need for that type of receiving material.

A print system which obviates the latter problem is known from US 5,923,942. A receiving material holder in this system has a setting means on which there are preprogrammed a number of types of receiving materials which are frequently selected. If an operator of the system inserts one of these types of receiving material in the holder, he only has to set the setting means to the inserted type of receiving material. The system then knows of itself what type of receiving material has been inserted and the operator need not specify this in all its properties. In addition to the many types of receiving material used, he can use the known setting means also to select a non-predefined type by setting the said means to "Other". This possibility is provided because it may happen that a different type of receiving material is loaded compared with one of the standard types. If the setting means is set to "Other" a dialogue with the operator follows so that he can define the inserted paper type.
A disadvantage of this known system is that the selection of "Other" will have to be made relatively frequently in an environment in which very many different types of paper are used, for example a central reproduction department of a large company or a job printer. As a result, the advantage of predefined types of receiving materials will be relatively insignificant. Another solution might be to offer many more of such predefined types of receiving materials on the setting means, but this in turn has the disadvantage that the means becomes less readily overviewed.

From US 6,504,556 a print system is known in which, starting from a list of predefined receiving materials, an operator can define an inserted type of receiving material by means of a drag-and-drop operation. The list comprises a set of icons, each icon representing one type of receiving material. This list is in fact a library, which contains a large enumeration of receiving materials. If the operator wishes to insert one type of receiving material that is not yet included in the library, then he can make a new icon and define the associated type of receiving material.
A disadvantage of this known print system is that the list becomes cumbersome in environments where very many types of receiving material are used. To search for the correct icon in the list may then take so much time that the gain in time obtained by no longer having to input the separate properties of the receiving material is completely lost.

The object of the invention is to provide a method whereby a print system can be efficiently used, an operator of the system requiring a minimum amount of operating time to enable the system to finish his jobs. Another object is to provide a print system adapted to the use of this method.

For this purpose, a method according to the preamble has been invented wherein said method further comprises establishing one or more types of receiving material required to finish the set of jobs in the print queue, displaying, via a display unit, a list comprising said one or more types of receiving material, and the selection, via an operator of the system, of a type of receiving material from said list.

This method is based on the recognition that an operator of the system will normally insert a receiving material required for finishing the planned jobs. In the method according to the invention, it is established what types of receiving material are required to finish jobs planned for the next hour, for example, in respect of a set of jobs. If the operator now, for example, has inserted receiving material in a holder and he then wants to indicate what material this is, the system displays to him a list of materials as required for the planned jobs. Since the operator has inserted a material required to finish one or more of these jobs, he will therefore see in the list the material inserted by him. By selecting this material it is made clear to the system that this is the type of material that the operator has inserted in the holder. There are many advantages to this method, on the one hand the operator is presented with only a limited list so that he can rapidly select the correct type of receiving material, in addition the list contains the relevant types of receiving material, mainly those types which really are required to finish the job or jobs, and in addition there is no longer any need completely to define a type of receiving material (colour, size, thickness, with or without tabs, perforations, etc). The operator simply selects a specific type of which the definition is ready. It should be noted that selection of a type of receiving material from the list can take place either before or after insertion of said material. If it takes place before insertion, then the operator indicates to the system what type of material he wishes to insert, whereafter he does that. This gives the system sufficient information to enable it to understand that the inserted material is the preselected material. It is also possible for the operator first to insert a material and then select that material afterwards from the list so that again a definition of the inserted material is made possible.

In one embodiment, the list comprises one or more types of predetermined receiving material. This embodiment is based on the recognition that the operator in some cases will wish to insert a receiving material which is not required for one of the jobs in the set. Then again he will wish to have the possibility of defining the material that has either been inserted or is still to be inserted (informing the system) by selecting it from the list. The operator will often wish to insert specific standard materials, for example such as white paper of A4 format and a thickness of 80 g/m², even if this material is temporarily not required, if he knows that there are no holders that contain that material (at least no holders for which the material is defined). This material is so frequently necessary that filling the holders with this material will not be found to be an unnecessary action, despite the fact that there is no urgent shortage.

The one or more types of predetermined receiving material may be a list which can be adapted by the operator or service engineer. This list could also be generated by the system itself on the basis of predetermined criteria, such as the requirements found in the course of time, the frequency of replenishing, and so on.

In a further embodiment the print system comprises a plurality of holders and, for each of said holders, a type of receiving material is specified, each of said types of receiving material forming part of the list. In this embodiment, in every case, those types of receiving material are displayed which are defined for the holders of the print system. A type of receiving material is frequently inserted without there being any acute need of that material. Thus it is an advantage that the operator sees in the list, not only the materials which really are required for finishing the planned jobs, but also those materials which are located in one or more of the holders of the print system but are not yet planned to be used.

In one embodiment, selection of a type of receiving material is preceded by insertion of the corresponding receiving material. The advantage of this embodiment is that it fits in better with a smooth method of working, i.e., first perform an action, in this case insertion of a receiving material, and then define what has been done.
In another embodiment, the insertion of the receiving material is followed by the indication that that type of receiving material is still to be selected, whereafter the print system shows the operator by means of the display unit the list of receiving materials in such manner that the operator can select the inserted type of receiving material from the list. In a further embodiment, the list is presented to the operator in response to the indication that the inserted material is still to be selected. In this embodiment, for example, after he has inserted the material the operator himself indicates that this type of material is still to be selected, for example by actuation of a button. Actuation of that button is followed by the display of the list to the operator.

In yet a further embodiment, the display unit automatically displays the list in response to the said indication that said type of receiving material is still to be selected. This has the advantage that the operator is automatically referred to the fact that he must still select the inserted material (only then can the system in fact establish what material has been inserted). This is an advantage particularly in large print systems in which a holder is not situated in the direct surroundings of a monitor screen for the operation of the system. If the operator inserts a receiving material in such a holder and then moves to the monitor screen, it is quite likely that he will no longer remember that he must still define the inserted material. An automatic display of the list solves that problem.

The invention will now be explained further with reference to the Examples indicated below.
Figure 1 shows the general arrangement of the print system.
Figure 2 shows important parts of said print system.
Figure 3 shows an image that can be displayed on the monitor screen of a display unit of the print system.
Figure 4 shows the same image as Figure 3 but in this case with a dialogue window at the top.
Figure 5 shows another mode of the print system on the display unit.
Figure 6 shows the dialogue window with which an operator can change a paper setting.
Figure 7 shows another mode on the display unit.

### Figure 1

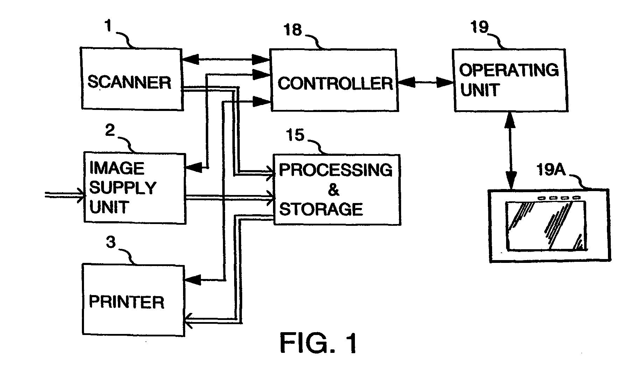

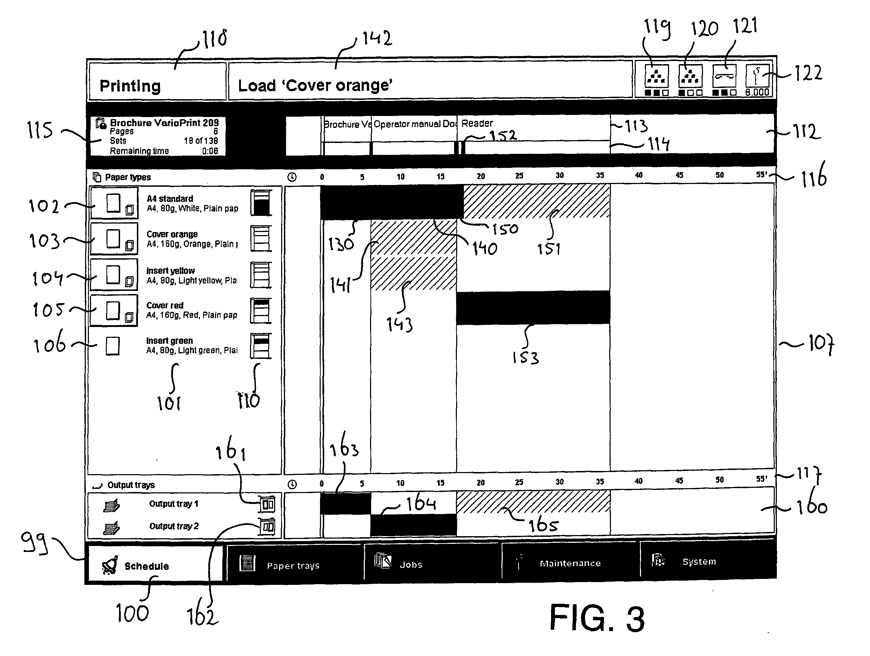

Figure 1 shows the general arrangement of a print system. This system comprises a scanner 1 for opto-electrical scanning of a document and delivering digital image information corresponding thereto, a feeder 2 for feeding image information from an external source to the system and a print engine 3 for printing digital image information on a receiving material. Both the scanner 1 and the feeder unit 2 are connected to a device 15 for processing and intermediate storage of image information, which is in turn connected to the print engine 3. The scanner 1, feeder unit 2, device 15 and print engine 3 are connected to a central control 18, which is also connected to an operator control unit 19 provided with an operator control panel 19A with operator control elements and a display element, in this case an LCD screen in the form of a touch screen for use by an operator at the print system. This display unit is developed further in Figure 3.

### Figure 2

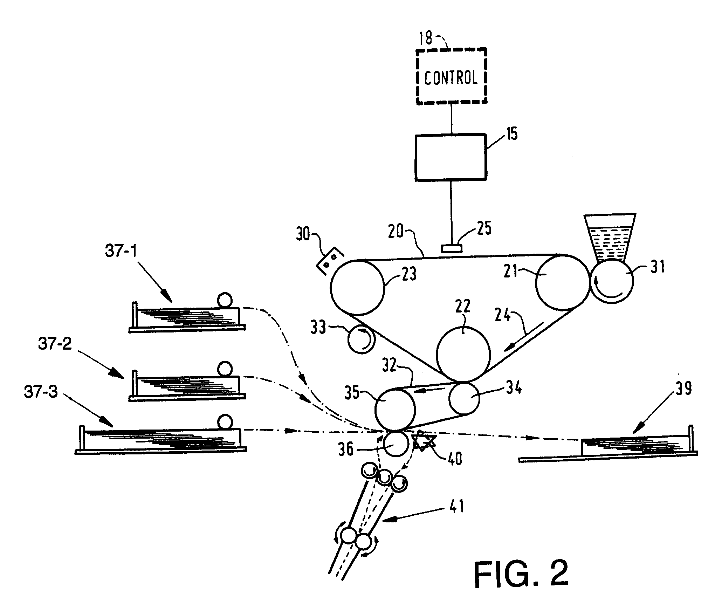

Figure 2 shows the important parts of the print system. The illustration shows important parts of the print engine 3, a number of holders 37 for holding sheets of receiving material and delivering said sheets to the print engine, and a output tray 39 for collecting printed sheets. The various parts are controlled by the central control unit 18, directly or through the agency of sub-control modules.
The print engine 3 is provided with an endless photoconductive belt 20, which is advanced in the direction of arrow 24 at a uniform speed by means of drive and guide rollers 21, 22 and 23 respectively. By means of the processed data fed from device 15, an LED array 25 is so controlled that the photoconductive belt 20, after being electrostatically charged by a corona device 30, is exposed image-wise line by line.
The latent charge image forming on the belt 20 as a result of the exposure is developed by means of a magnetic brush device 31 with toner powder to form a toner image which is then brought into contact under pressure with an endless intermediate medium belt 32 in a first transfer zone, said belt being made from or being covered with an elastic and heat-resistant material, for example silicone rubber. In these conditions, the toner image is transferred by adhesion forces from the belt 20 to the belt 32. After this image transfer, any remaining toner powder residues are removed from the photoconductive belt 20 by means of a cleaning device 33, whereafter said belt 20 is ready for re-use. The intermediate medium belt 32 is trained over drive and guide rollers 34, 35, the intermediate medium belt 32 being heated to a temperature above the softening temperature of the toner powder, for example by means of a infra-red emitter disposed inside roller 35. While the belt 32 with the toner image thereon is advanced, said toner image becomes tacky as a result of the heating. In a second transfer zone between the belt 32 and a pressure roller 36, the tacky toner image is transferred under the influence of pressure and at the same fixed on a sheet of receiving material fed from the holders 37-1, 37-2 of 37-3. The resulting printed sheet is finally deposited in an output tray 39. This forms part of a finisher (not shown in detail), which also has one or more following output trays and units for after-treatment of printed sets of receiving materials, for example by stapling them or providing them with a cover. Another possibility is that a printed sheet is fed by a deflector element 40 (placed in the position indicated by broken lines) to an inverting device 41. In this inverting device 41 the sheet is turned over, whereafter it is again fed to the second transfer zone between the belt 32 and the pressure roller 36, so as to be printed with a powder image on the other side in said transfer zone and then deposited in the output tray 39.

The drawing shows three holders 37-1, 37-2 and 37-3, the first two being arranged for copy sheets of A4 format and the last for copy sheets of A3 format. When sheets are loaded into one of the holders, for example A4, white, plain paper in 37-1, the control unit receives details of the type of receiving material in that holder. In this way, a type of receiving material is defined for that holder. The control system can then address a holder when the type of material in that holder, at least according to the definition, corresponds to the material as required to finish a job. If that type of material is also defined for one of the other holders, then it would also be possible to address one of those holders, for example if the material is exhausted in holder 37-1. In this embodiment a holder retains its definition even if the material in the holder is used up.
If no type of material has been defined for a holder, or if the definition has been removed, that holder cannot be addressed for delivering sheets of receiving material to the print engine. Of course, the number of holder could also be other than three, and holders can be used for other formats or orientations of copy sheets.

### Figure 3

Figure 3 shows an image displayed on the screen of display unit 19. A display unit of this kind is also referred to as a user interface. The image is part of the scheduler mode as indicated by reference 100 on toolbar 99.
In this mode, a column 101 is shown on the left, and a series of paper types beneath one another. The first paper type mentioned is A4 standard (A4, 80g, white, plain paper) which is indicated as such in this column including its most important properties. The last type of paper indicated is "green insert sheet". On the left of these receiving material types, buttons 102, 103, 104, 105 and 106 are shown. With regard to the buttons 102 to 105, it is indicated that these can be operated by highlighting the paper logo. Within the frame it is also indicated by means of the small double paper logo in the right hand bottom corner that these paper types are necessary for performing planned jobs. The type "green insert sheet" is not planned at the moment. The reason that this type of paper is nevertheless indicated is that this type is defined for one of the holders of the print system.
Column 110 is situated on the right of column of 101. For each paper type there is a diagrammatic indication of the holder module of the print system, in this case a module with four holders situated one above the other. In each module the holder is indicated in which the corresponding paper type is located. The type "A4 standard" is located in the bottom two holders. The types "orange cover" (corresponding to button 103) and "yellow insert sheet" (corresponding to button 104) are not present in any of the holders. The type "red cover" is present in the top holder and the type "green insert sheet" is present in the second holder from the top.

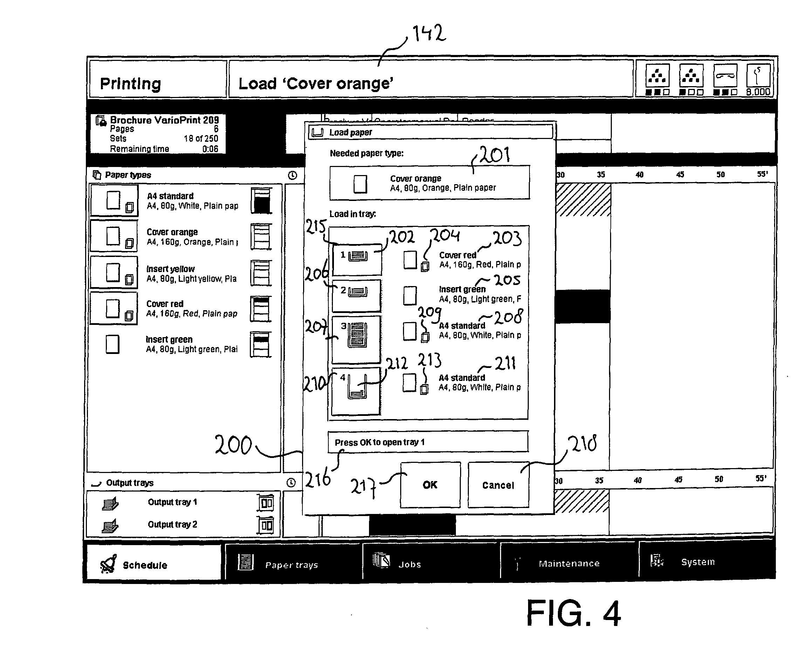

Display 112 shows what jobs are planned for the next 55 minutes. In this way jobs (112) and paper types (101) together form a matrix 107. Sub-bar 113 shows the job names, in this case "Brochure Varioprint 209", "Operator manual DocWorks" and "reader". Sub-bar 114 gives the job limits and the times at which a limitation occurs in the system so that the system must interrupt printing. The corresponding time can be read off in time bars 116 and 117.
The job being processed at this moment, namely "Brochure Varioprint 209", is also displayed in element 115. Here there is also additional information regarding the job, such as the number of pages per document (6), the number of documents still to be printed (18), the total number of documents for printing (138) and the time still required to finish the job (6 minutes). This time can also be read off by combining the information from sub-bars 113 and 114 with the information from 116.
The image indicates that the system is engaged in printing (unit 118, status "Printing"). Units 119 and 120 indicate to what extent the corresponding toner supply systems, one for black toner and one for coloured toner, are still filled with toner (two-thirds and one-third respectively). Unit 121 indicates that there is still a supply of approximately two-thirds of the maximum number of staples that can be loaded in the system. Unit 122 indicates that a maintenance operation is necessary over 8,000 prints.
Matrix 107 forms the heart of the image. This part of the image indicates what types of receiving material are defined for the jobs of row 112 and also whether there is sufficient receiving material present completely to finish the job. Thus with regard to the current job ("Brochure Variopoint 209") it is indicated that paper of the A4 standard type is required for this purpose. This is indicated by image unit 103 which is at the point of intersection of said type of receiving material and the said job. The colour of this image unit, for example green, shown as complete blackening in this figure, indicates that there is sufficient paper present to finish the job. Paper of the A4 standard type is also required to finish the next job "Operator Manual DocWorks") and this is indicated by image unit 140. This unit starts at the same time as the beginning of the job (over approximately 6 minutes) and ends at the end of the job (over approximately 17 minutes). The entire unit is green, so that there is sufficient of this paper type present in the holders for this job also to be finished. This job also requires paper of the "orange cover" type, indicated by image unit 141. This unit also starts and ends at the job limits. Since this paper is not present in the holders there is a shortage of that material. This is indicated by a colour, namely orange (shown as hatching in this figure). This colour is a symbol of a shortage which will really not be actually noticeable for some time as "the absence" of said material so that the job must be interrupted. To obviate this, the operator of the system must therefore load this paper before the start of the job, and this is indicated by a thick orange stripe in sub-bar 114. Since this is the first type of material of which a shortage will be perceptible, it is important that this type of paper should be the first to be loaded by the operator. To make this clear to the operator, image unit 142 indicates that the operator must load that paper. To load that paper, the operator presses button 103, whereafter a dialogue window as shown in Figure 4 appears. This example will not be discussed further here.
Paper of the "yellow insert sheet" type is also required for this job but is not loaded in one or more of the holders. Image unit 143 indicates this by means of an orange colour. Sub-bar 114 indicates the time when the shortage of this paper becomes perceptible. The third job "Reader" also requires paper of the A4 standard type. This paper will be necessary at the start of the job and is indicated by the green image unit 150. Image unit 151 also makes clear that this paper will run out after approximately one minute printing of this job. This time is also indicated in sub-bar 114 by the thick orange stripe 152. The system operator thus has a clear overview to show that he must load paper of the A4 standard type before approximately 17 minutes elapse, in order to prevent job number 3 from being interrupted. Paper of the "red cover" type is also required for this third job. This is indicated by means of unit 153. The colour green indicates that there is sufficient of this paper loaded to finish job.
In the event of an acute problem, for example A4 standard paper no longer being present at that time so that printing by the print system must be interrupted at that precise moment, this is preferably indicated by the red colours of the corresponding image unit. This colour is striking and is generally associated with an acute interruption of a continuous process.

Bar 160 relates to the output trays of the print system, which in this case comprises two trays, namely output tray 1 and output tray 2. These are indicated by icons 161 and 162. Image unit 163, which is situated at the point of intersection of the output tray 1 and job 1, indicates that the documents of job 1 have been deposited in the first tray. The green colour indicates that there is sufficient room in this tray to collect all the documents requiring to be formed. Image unit 164 indicates that the documents of 2 are deposited in output tray 2. There is sufficient room here as well. Image unit 3 indicates that the documents of job 3 are planned to be deposited in output tray 1. The orange colour of this image unit indicates that there is no longer any space in that tray at the start of this job. The operator therefore sees that he must (at least partially) empty output tray 1 in order to prevent the third job from not being starting because of lack of space in the planned output tray. In one embodiment, an output tray is used to deposit the documents associated with one job at maximum. After the first job has been finished, therefore, the corresponding output tray must be emptied before documents of the next job can be deposited in that tray, even if there were still sufficient room to deposit documents of this next job in the same tray. The advantage of this embodiment is that documents of different jobs will not be mixed up.

In a variant of the above-described embodiment, the image units 130, 140, 141, 143, 150, 151 and 153 give an indication as to the quantities of receiving material to which each of the units corresponds. This could be indicated, for example, by using small vertical lines in the units, the space between two lines corresponding to a specific number of sheets of receiving material. Typically, a quantity of 500 sheets is indicated because this is equivalent to the contents of conventional paper packages. This is convenient particularly for the image units 141, 143 and 151. The operator thus sees at a glance how many packs of paper he must insert to meet the shortage. Thus unit 141 in this example corresponds to less than 50 sheets (1 space, hence one pack to be replenished), unit 143 corresponds to 100 sheets (1 space, hence one pack to be replenished) and unit 151 corresponds to approximately to 2,000 sheets (4 spaces, hence 4 packs to replenished). Of course other quantities can be selected for the space between the lines, and other methods can be selected to indicate the quantity of receiving material corresponding to an image unit in the matrix.

### Figure 4

Figure 4 shows the same image as Figure 3 but now with the dialogue window 200 at the top. This window is displayed in response to the operator indicating that he wishes to perform the requested operation "Load Cover orange" as indicated in Figure 3.
Image unit 201 also indicates what the required paper type is. This diagrammatically indicates what holders the print system comprises, namely holders 1, 2, 3 and 4 indicated by the icons 202, 206, 207 and 210. The icons also diagrammatically give an indication of the size of the holder. Holders 1 and 2 are small, holders 3 and 4 are large. The icons also indicate the extent to which the holders are filled: holders 1, 2 and 3 are approximately full, holder 4 is almost empty (see element 212). On the right of the icons it is indicated which type of receiving material is defined for each of the holders (the system assuming that the defined material corresponds to the material actually present). Thus image unit 203 indicates in text that paper of the "Red cover" type (A4, 160g, red, plain paper) is defined for holder 1. It is apparent from icon 202 that this holder is almost full. Image unit 204 indicates that this paper is planned for one or more of the jobs which should be finished during the next hour (see bar 112 in Figure 3).
Image unit 205 indicates what type of receiving material is defined for holder 2, namely "green insert sheet". Since there is no sub-image corresponding to unit 204 for this paper type, the operator sees that this paper is not required to finish one of the planned jobs.
Image unit 208 indicates that paper of the A4 standard type is defined for holder 3. Icon 207 indicates that holder 3 is almost full and image unit 209 indicates that this type of paper is required to finish one or more of the planned jobs.
Image unit 211 indicates what type of receiving material is defined for holder 4, which is almost empty (see 212). Unit 213 indicates that this type of paper is required to finish one or more of the jobs planned for the next hour.

The operator can select a holder to receive the required paper. Since holder 2 contains a material that is not required for one of the planned jobs, the operator could select that holder. However, holder 4 is probably not necessary to finish one of the jobs either, because holder 3 is completely full of the same paper type. Holder 1 could also be selected. Probably the paper in this holder is required for one of the planned jobs, but because this paper is only required for job 3, emptying of the holder will not result in interruption of jobs 1 and 2. In this case the operator has selected holder 1 by actuating icon 202. The selection of that holder is indicated by the thickening 215 and the text in the image unit 216. If the operator now presses button 217, the choice of holder 1 is confirmed. Confirmation of the choice by the use of the button 217 results in holder 1 being opened so that the operator can insert the required paper, orange covers. After the paper has been inserted the holder is closed. Closing this holder serves as confirmation that the required paper type has been inserted. The dialogue window 200 disappears from the screen and image unit 141 will change to a green surface. In this way all the limitations resulting in the interruption of a job can be eliminated. The dialogue window can also be closed without changing a definition for a holder. For this purpose the operator can press button 218 ("Cancel").

### Figure 5

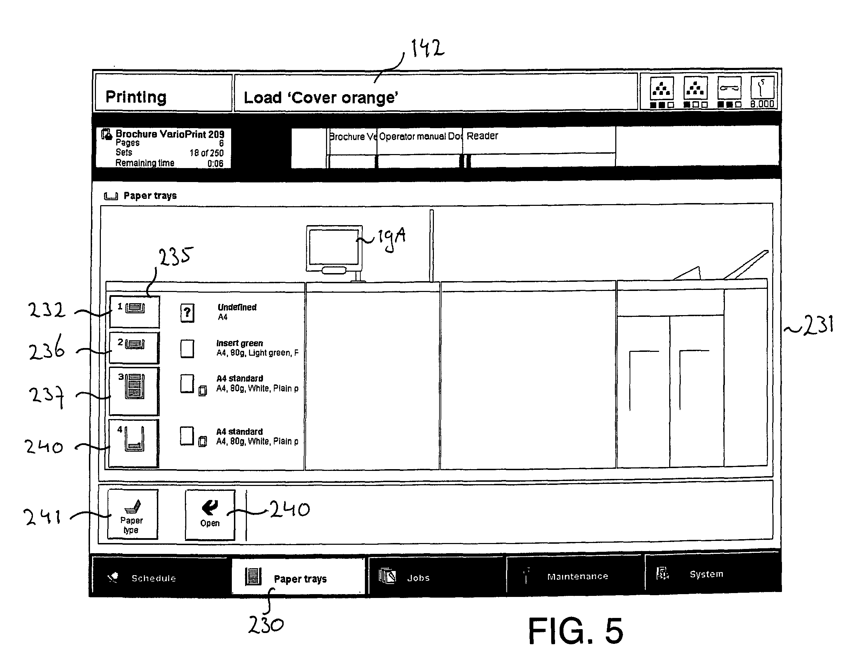

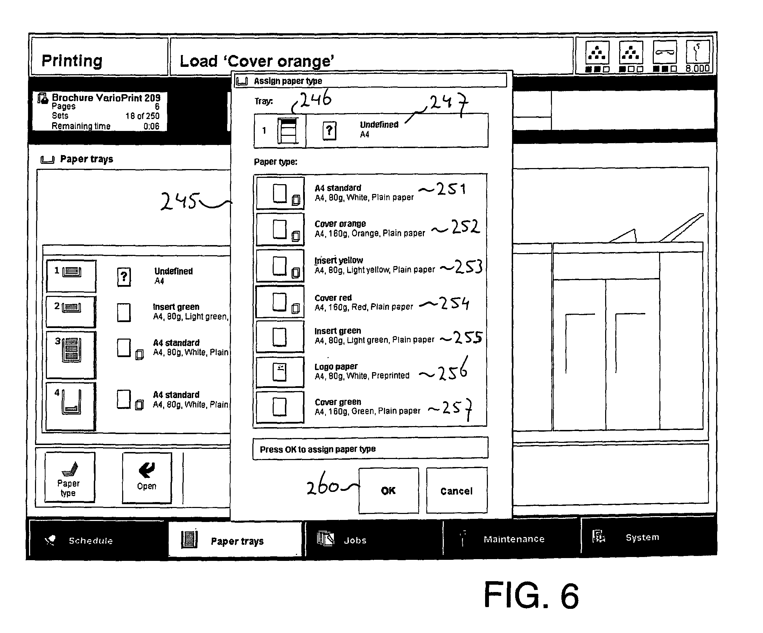

Figure 5 shows another mode of the print system via the display unit. This is the paper trays mode, which is indicated by image unit 230. This mode is used, for example, by an operator for placing paper in one of the holders without instructions for this being given in the scheduler mode. This might be the case, for example, if the operator wishes to introduce paper of a type which on average is frequently required or, for example, to correct errors such as a definition of a holder which does not correspond to the type of receiving material situated in that holder.
The operator selects the paper trays mode by selecting image unit 230. A diagrammatic reproduction 231 of the print engine, the output trays, the screen 19A and the holders 1 to 4 appears on the screen. The same information is given for each of the holders as in the dialogue window 200 in Figure 4. It is indicated that holder 1 has been selected in this case. For this purpose, thickening 235 is provided at the icon of holder 1. The operator can indicate by actuating image unit 241, that he wants to change the definition of the paper type for this holder. The effect of this is that the definition of this holder as indicated in the figure is changed to "undefined". In addition, a dialogue window 245 will appear on the screen which enables him to set a new definition. This window is shown in Figure 6. He will then open the holder, for example by actuating an "open" knob on the holder itself, and place the paper according to the new definition in the holder. For this purpose, he will first remove the old paper ("red cover") and then insert the paper according to the new definition ("orange cover").
Another possibility, before he makes the selection to change the paper definition, is to actuate image unit 240 so that holder 1 is opened. The operator, who wants to insert paper of the "orange cover" type in this holder, will now remove the paper that is still in the holder ("red cover") and insert the type of paper he requires. He will then indicate at the holder, for example by pressing a button (not shown), that the inserted paper type ("orange cover") does not correspond to the definition of that holder ("red cover"). After the holder is closed, a dialogue 245 then appears on the screen, with which the operator can change the definition. This dialogue window is shown in Figure 6. In one embodiment, this window appears automatically in response to the closing of the holder. In another embodiment, the indication that the inserted paper type does not correspond to the definition of that holder only has the effect that the status of that holder is changed to "undefined". This holder can then no longer be addressed by the system to deliver sheets of receiving material until the operator allocates a new definition to the holder.

### Figure 6

Figure indicates the dialogue window 245 with which an operator can change or set a paper definition. Calling up this window is coupled to a specific holder, in this case holder 1, indicated by image unit 246. Since the operator previously indicated that the inserted paper (orange covers) does not correspond to the paper definition (was: "red cover") the status of this holder is "undefined". This is indicated in image unit 247.
In the window 245 the operator receives a list of types of receiving materials. This list comprises the receiving materials required to finish the planned jobs as indicated in bar 112 (Figure 3), namely A4 standard (251), orange covers (252), yellow insert sheets (253) and red covers (254). In addition, the list contains the types of receiving materials as defined for one or more of the holders but which types are not necessary for finishing one of the planned jobs. In this example, only paper of the green insert sheet type (255) comes under this. The list includes a number of predetermined materials which are frequently required for printing, namely paper provided with a pre-printed logo (256) and green covers (257). The latter predetermined materials can be set by the operator of the system so that they can be adapted to circumstances. Types can be changed or removed and new types can be added to the list.
The operator can now select a type of material as definition for the holder 1 illustrated. This will normally be the type inserted by him. By actuating button 260 the choice is confirmed and added to the holder as definition.
Since the operator is presented with a list with types of receiving materials, he does not have to define completely in respect of all its properties any inserted type of receiving material, but can simply select the inserted type. Since the list takes into account the required paper types for the planned jobs, this list is relatively short and readily surveyed. A choice can then be made quickly and faultlessly.

### Figure 7

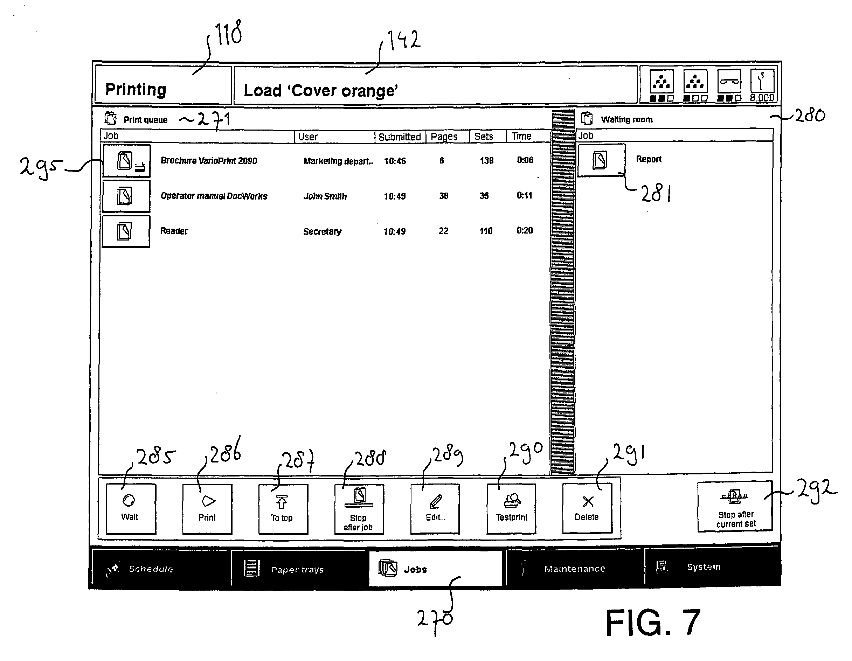

Figure 7 shows another mode on the display unit. In this "jobs" mode a survey is given of the jobs which are in the printing queue and are planned for finishing.
The image units 118 and 142 are also displayed in this mode. At the bottom, image unit 270 indicates that the jobs mode has been selected. In this mode, a list of the jobs planned for finishing is given under 271. Since all the jobs are to be finished in the next hour, these are the same jobs as indicated in bar 112 in Figure 3. An icon is given for each of the job names and from it an operator of the print system can see the status of that job, for example "is now being printed", "is converted to printer language", and so on. Thus icon 295 indicates that this job is being printed at this moment. Each of the job names is followed by additional information as to the origin of the job ("User"), when the job was sent to the system ("Submitted"), how many pages each document of the job contains ("Pages"), how many documents must be printed within the job ("Sets") and what the expected remaining processing time is ("Time"). Under 280 a waiting space is shown in which jobs, in this case one job 281, are located which have been reported to the print system but which are not yet planned for finishing. The removal of this job to the print queue takes place by means of button 286. Relocating a job from the print queue to the waiting space can also be carried out, and for this button 285 is necessary. By means of button 287, a job in the print queue can be placed at the head of the queue so that it is finished at the next job. Actuation of button 288 has the effect that the print system stops processing jobs when the selected job is ready. By means of button 289 the settings of jobs in the print queue can be changed. Button 290 enables a proof to be made of the job in the waiting room so that an operator can assess whether the settings are correct for finishing the job or whether they have to be changed. Button 291 is used to remove jobs. Actuation of button 292 ensures that the print system stops processing jobs when the document that it is now involved with is finished.

## Claims

1. A method of using a print system comprising a print engine for printing a receiving material and a holder for holding said receiving material and delivering said material to the print engine, the method comprising
- receiving jobs by the system, a job being an order comprising printing information with the print engine on a type of receiving material specified in said order,
- placing the jobs in a print queue in a sequence of finishing,
- establishing one or more types of receiving material required to finish a set of jobs in the print queue,
- displaying, via a display unit, a list comprising said one or more types of receiving material,
- and selection, by an operator of the system, of a type of receiving material from said list.

2. A method according to claim 1, wherein the list contains one or more types of predetermined receiving material.

3. A method according to claim 2, wherein the print system comprises a plurality of holders and, for each of said holders, a type of receiving material is specified, each of said types of receiving material forming part of the list.

4. A method according to any one of the preceding claims, wherein the selection of a type of receiving material is preceded by insertion of the corresponding receiving material in a holder.

5. A method according to claim 4, wherein the insertion of the receiving material is followed by indicating that this type of receiving material is still to be selected, whereafter the print system shows an operator of said system the list of receiving materials by means of the display unit in such manner that the operator can select the inserted type of receiving material from the list.

6. A method according to claim 1, wherein the display unit automatically shows the list in response to the said indication that said type of receiving material is still to be selected.

7. A print system comprising a print engine for printing a receiving material and a holder for holding a type of receiving material and delivering said material to the print engine, a receiver for receiving jobs, a job being an order comprising printing information on one or more types of receiving material specified in said order, and a control system for planning jobs comprising placing the jobs in a print queue in a sequence of finishing, the control system being adapted to establish one or more types of receiving material required to finish a set of jobs in the print queue, and displaying, via a display unit, a list comprising said one or more types of receiving material, the system being so adapted that an operator of the system can select a type of receiving material from said list.
